# EUROPEAN PATENT SPECIFICATION

(11) **EP 3 336 994 B1**
(45) Date of publication and mention of the grant of the patent: **25.11.2026**
(21) Application number: 17197859.6
(22) Date of filing: 23.10.2017
(51) Int. Cl.: H02H 11/00, H02H 3/06, H02H 3/08, H02H 5/12

(54) **CIRCUIT PROTECTION APPARATUS WITH AUXILIARY SWITCH DEVICE**
SCHALTUNGSSCHUTZVORRICHTUNG MIT HILFSSCHALTERVORRICHTUNG
APPAREIL DE PROTECTION DE CIRCUIT AVEC DISPOSITIF INTERRUPTEUR AUXILIAIRE

(30) Priority: 01.12.2016 GB 201620424
(43) Date of publication of application: 20.06.2018
(73) Proprietor: Camlin Technologies Limited, Lisburn, Antrim BT28 2EX (GB)
(72) Inventor: McILROY, Colin, Magheralin, County Down (GB)
(74) Representative: FRKelly

(56) References cited:
- WO-A1-2016/174622
- US-A1- 2013 258 538

## Description

### Field of the Invention

The present invention relates to circuit protection apparatus. The invention relates particularly to circuit protection apparatus for high voltage (HV), medium voltage (MV) and low voltage (LV) electrical supply and distribution networks.

### Background to the Invention

Electrical supply and distribution networks usually include circuit protection apparatus that operate in a normally conducting state and which adopt an isolating state in response to detection of a fault in a relevant portion of the network thereby isolating the relevant portion of the network from the electricity supply. Examples of such circuit protection apparatus include circuit breakers, reclosers, residual current devices and fuse devices. In each case the apparatus is capable of being operated from its isolating state to its conducting state. Typically this involves closing a mechanical switch to complete an electrical circuit with a view to restoring electrical power. Usually, the switch is closed after it is determined that the fault has been cleared or after a pre-determined period of time has elapsed. Such circuit protection apparatus are sometimes referred to as ADS (automatic disconnection of supply) apparatus.

A problem arises in that, when the switch is closed to restore power (whether or not the fault has cleared) current may flow in the network (and/or in structures that have become electrically connected to the network in the event of a fault) that is capable of causing injury or death in any person in contact with a live conducting structure, e.g. an engineer working to clear the fault or an unfortunate bystander who happens to be in contact with a live conducting structure. It would be desirable to mitigate this problem.

International patent application WO2016/174622 discloses a power safety device with a load monitor that determines load conditions and supplies power only when hazardous conditions are not detected. US patent application US2013/258538 discloses a power conditioning, distribution and management system that includes a switch circuit having a hybrid switch for causing the switch circuit to close at a zero crossing of the AC supply voltage.

### Summary of the Invention

A first aspect of the invention provides a circuit protection apparatus as claimed in claim 1.

Said pre-determined period of time has a length of at least 1s, preferably between 1s and 60s. It may alternatively last for more than 60s, for example up to 5 or 10 minutes.

In preferred embodiments, during said pre-determined period of time, said auxiliary switch device is caused to adopt its conducting state for at least one period of at least 0.1s, preferably between 0.1s and 1s, although alternative durations may be employed, for example between 0.05s and 60s. The auxiliary switch device may be toggled on and off during said pre-determined period of time, each "on" period and/or each "off" period having the same or different durations as desired.

Preferably, said auxiliary switch device comprises an AC semiconductor switch. Said auxiliary switch device may comprise at least one semiconductor controlled rectifier. Optionally said auxiliary switch device comprises first and second semiconductor controlled rectifiers arranged to conduct current in opposite directions. Said auxiliary switch device may comprise a bidirectional triode thyristor.

In typical embodiments, said circuit protection device comprises a mechanical switch. Causing said circuit protection device to adopt its conducting state may therefore involve closing said mechanical switch.

In some embodiments said circuit protection device comprises a circuit breaker.

In some embodiments said circuit protection device is operable from its conducting state to its non-conducting state by opening said mechanical switch.

In some embodiments said circuit protection device comprises a fuse device.

The circuit protection apparatus may include a fault detection device, wherein said circuit protection device caused to operate from its conducting state to its non-conducting state in response to detection of an electrical fault by said fault detection device.

From a second aspect the invention provides a method of operating a circuit protection apparatus as claimed in claim 14.

Further advantageous aspects of the invention will be apparent to those ordinarily skilled in the art upon review of the following description of a specific embodiment and with reference to the accompanying drawings.

### Brief Description of the Drawings

An embodiment of the invention is now described by way of example and with reference to the accompanying drawings in which:
Figure 1 is a schematic diagram of an circuit protection apparatus embodying one aspect of the invention; and
Figure 2 is a graphical representation of an AC electrical supply waveform and a corresponding output waveform from a semiconductor controlled rectifier (SCR) switch device included in preferred embodiments of the circuit protection apparatus of Figure 1.

### Detailed Description of the Drawings

Referring now to the drawings there is shown, generally indicated as 10, a circuit protection apparatus embodying one aspect of the invention. The circuit protection apparatus 10 is shown connected between an AC electrical supply and an AC load. The AC supply may be provided by any relevant part of an electrical supply or distribution network. The AC supply may be single phase or multi-phase. Where the AC supply is multi-phase, a respective instance of the circuit protection apparatus 10 may be provided for each phase. The AC load may comprise any electrical asset(s) including electrical equipment, conductors, electrical networks or portion(s) of networks.

The circuit protection apparatus 10 includes a circuit protection device 12 that is operable between a conducting state, in which it makes an electrical connection between the AC supply and the AC load, and an isolating, or non-conducting, state in which it breaks the electrical connection to isolate the AC load from the AC supply. In typical embodiments the circuit protection device 12, when in its conducting state, supplies AC to the load at full available AC power.

In typical embodiments, the circuit protection device 12 comprises a mechanical switch 13 including a contact 14 that is movable from an open state, in which it mechanically and electrically isolates electrical terminals 16, 18 (the contact 14 itself may serve as one of the terminals) to a closed state in which the contact 14 mechanically and electrically connects the electrical terminals 16, 18 to allow current to flow through the circuit protection device 12.

In some embodiments, for example when the circuit protection device 12 is a recloser or other circuit breaker, the mechanical contact 14 is movable between open and closed states that correspond to the isolating and conducting states of the circuit protection device 12. In particular, when the circuit protection device 12 is closed (conducting), the contact 14 is closed to mechanically and electrically connect electrical terminals 16, 18 thereby allowing current to flow through the circuit protection device 12. When the circuit protection device 12 is open (isolating), the contact 14 opens to mechanically and electrically isolate the terminals 16, 18 thereby preventing current from flowing through the circuit protection device 12.

In such embodiments, the circuit protection device 12 typically operates in the conducting, or closed, state and adopts the isolating, or open, state in response to detection of a fault. To this end the circuit protection device 12 may include, or be connected to, a fault detection device, for example a current sensor 11. The fault detection device is directly or indirectly coupled to the circuit protection device 12 such that detection of a fault, which may for example manifest as excessive current, by the fault detection device causes the circuit protection device 12 to open. The fault detection device may be located at the circuit protection device 12 itself or at any other location in the electrical system of which the circuit protection device 12 is part depending on the application.

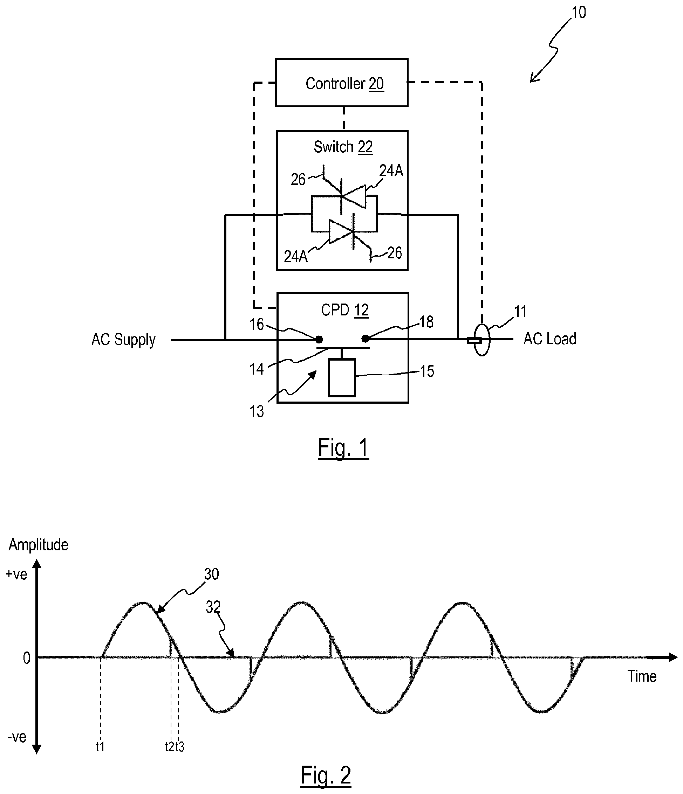

In such embodiments, the circuit protection device 12 includes an actuator 15 for opening the circuit protection device 12, i.e. for moving the contact 14 from its closed state to its open state. The actuator may take any conventional form, for example comprising an electromechanical or electromagnetic or piezoelectric actuator. In any event, the actuator may be operable by an electrical activation signal received from the fault detection device directly or from a controller 20, which in turn may be responsive to the fault detection device 11, as shown in Figure 1.

In other embodiments the mechanical switch 13 may adopt a normally open state and be actuated to the closed state to transition the circuit protection device 12 from the isolating state to the conducting state. For example when the circuit protection device 12 is an electrical fuse device it may have a primary fuse (not shown) that is normally in-circuit to effect the conducting state of the circuit protection device 12. The fuse device has a secondary fuse (not shown) that is normally out-of-circuit but can be brought in-circuit by closing the switch 13. When the primary fuse ruptures in response to a fault, the circuit protection device 12 adopts its isolating state and may be returned to the conducting state by closing the switch 13 to bring the secondary fuse in-circuit. An example of such a fuse device is disclosed in European Patent 1912241. In such embodiments the primary fuse serves as the fault detection device. The switch 13 is typically opened manually and so there is no need for an actuator to open the switch 13 although one may be provided if desired.

In typical embodiments, the circuit protection device 12 includes an actuator 15 for closing the mechanical switch 13, i.e. moving the contact 14 into its closed state. The actuator 15 may take any conventional form, for example comprising a mechanical or electromechanical or electromagnetic or piezoelectric actuator. The actuator 15 may be the same actuator that is operable to open the switch 13 (where applicable), as is the case in the illustrated embodiment, or may be a separate actuator. The actuator may be operated by controller 20, which in typical embodiments is the same controller that opens the switch (where applicable) although separate controllers could alternatively be provided. In the illustrated embodiment the controller 20 is separate from the circuit protection device 12 but in alternative embodiments it may be part of the circuit protection device 12. In any event, the controller 20 may take any convenient conventional form, for example comprising a suitably programmed microprocessor or suitably configured logic device, and controls the actuator electrically. Depending on the embodiment, the controller 20 may be configured to close the switch 13 in response to determining that the fault has cleared, and/or after a pre-determined period of time has elapsed since the fault was detected, and/or in response to an operator command or other command.

The circuit protection apparatus 10 includes an auxiliary switch device 22 connected in parallel with the circuit protection device 12. The auxiliary switch device 22 is a solid state, or semiconductor, switch device. The auxiliary switch device 22 is controlled by controller 20 which may conveniently be the same controller that operates the mechanical switch 13, although separate controllers may alternatively be provided. In particular the controller 20 controls when the switch device 22 is on, in which case it conducts current and so supplies AC power from the AC load, and when it is off, in which case it does not conduct current and isolates the AC load from the AC supply.

In typical embodiments, the auxiliary switch device 22 comprises at least one semiconductor controlled rectifier (SCR) 24 or other semiconductor switch. Preferably the switch is an AC semiconductor switch capable of transmitting AC power from the AC supply to the AC load and to this end is capable of conducting current in both directions ( i.e. during positive and negative cycles respectively of the AC supply). In the illustrated embodiment the auxiliary switch device 22 comprises first and second SCRs 24A, 24B arranged to conduct current in opposite directions (i.e. during positive and negative cycles respectively of the AC supply). Each SCR 24A, 24B has a control, or gate, input 26 for controlling the on/off state of the respective SCR 24A, 24B. Typically an SCR is turned on by applying a pulse to the gate input 26 and turns off at the next zero crossing point of the supply voltage. When on, the SCR 24A, 24B conducts current in one direction only, and when off the SCR 24A, 24B does not conduct current in either direction. In this case, the controller 20 controls when the SCRs 24 are turned on by sending a control signal (typically a pulse) to the control inputs 26. The SCRs then turn off at the next zero crossing point of the supply voltage. Each SCR 24A, 24B may for example comprise a gate controlled thyristor.

In alternative embodiments, the auxiliary switch device 22 may take other forms, for example it may comprise a bidirectional triode thyristor, e.g. a TRIAC, which conducts current in either direction when turned on via a gate control input, and does not conduct otherwise. Alternatively still the switch device 22 may comprise any other suitable semiconductor device(s), for example IGBTs (insulated gate bipolar transistors) or FETs (field effect transistors). Depending on the nature of the semiconductor switch devices being used, the controller may provide control signals for turning the devices on and/or off as applicable and as would be apparent to a skilled person.

More generally the auxiliary switch device 22 may comprise any semiconductor switch that can be turned on or off and which, advantageously, can be operated to control the amplitude of the voltage that is conducted by the switch device 22, and which is preferably bidirectional. In particular the preferred auxiliary switch device 22 is capable of reducing the applied voltage below the level of the AC supply. In preferred embodiments, to reduce the amplitude of the voltage transmitted by the switch device 22, the controller 20 controls the operation of the switch device 22, via input 26, to turn on (i.e. to conduct) only during part of the cycle of the AC supply, in particular during one or more part of the cycle when the amplitude of the AC supply is below its peak value.

Figure 2 shows the AC supply voltage 30 as a signal whose amplitude varies sinusoidally over time. Figure 2 also shows the output of the switch device 22 as a voltage signal 32. In each half cycle of the AC supply 30, the auxiliary switch device 22 conducts for only part of the half cycle, and is switched off (i.e. does not conduct) during the rest of the half cycle. For example in the first half cycle shown in Figure 2, the switch device 22 does not conduct between times t1 and t2 but does conduct between t2 and t3. The switch device 22 is on and off for respective periods during each other half cycle of the AC signal 30, the on and off (i.e. conducting and non-conducting) periods typically having the same timing and duration in each half cycle, as is illustrated in Figure 2. In each half cycle, the conducting period of the switch device 22 does not coincide with the peak voltage of the AC signal 30. As a result, the amplitude of the voltage applied by the switch device 22 to the AC load is lower than the peak amplitude of the AC signal 30. In the illustrated embodiment the conducting period of the switch device 22 is immediately before a zero crossing point of the AC signal 30. For example, in Figure 2 t3 coincides with a zero crossing point of AC signal 30, and t2 occurs less than one quarter of a cycle before t3. Typically, but not necessarily, the timing and duration of the conducting period is the same in each half cycle. In any event, the output signal 32 of the switch device 22 comprises a series of time-spaced peaks with a peak amplitude lower than the peak amplitude of the AC signal 30. The frequency of the output signal 32 is typically the same as the frequency of the AC signal 30. The conducting period in each half cycle is less than one quarter of the AC cycle period, typically less than one eighth of the AC cycle period.

In the illustrated embodiment, one of the SCRs 24A is operated to conduct for the relevant part of the positive half cycle of the AC signal 30 and the other SCR 24B is operated to conduct for the relevant part of the negative half cycle of the AC signal 30. This operation of the SCRs 24A, 24B is performed by the controller 20 via inputs 26. In alternative embodiments, for example where the switch device 22 comprises a bidirectional triode thyristor, there may be a single control input 26 by which the controller 20 controls the operation of the switch device 22. Alternatively still, the switch device 22 may comprise only one SCR 24 and be capable of conducting during either the positive or negative half cycle only.

In a normal mode of operation, the circuit protection apparatus 10 operates with the circuit protection device 12 in its closed, or conducting, state and with the auxiliary switch device 22 in its off, or non-conducting state. In this mode, the mechanical switch 13 of the circuit protection device 12 may be closed (e.g. in the case where the circuit protection device 12 is a circuit breaker) or open (e.g. in the case where the circuit protection device 12 is a fuse device). In any event, AC power is supplied to the AC load via the circuit protection device 12.

The circuit protection device 12 may be caused to adopt its open, or non-conducting state, upon detection of a fault, or for maintenance or any other reason. When this happens, the circuit protection apparatus 10 ceases to supply AC power to the AC load because both the circuit protection device 12 and the auxiliary switch 22 are in the non-conducting state. Subsequently, it is desired to return the circuit protection apparatus 10 to the normal mode of operation and this involves closing the mechanical switch 13 of the circuit protection device 12. Advantageously, the circuit protection apparatus 10 is operable in a safe closure mode in which the auxiliary switch device 22 is turned on, i.e. caused to adopt its conducting state, prior to the circuit protection device 12 being caused to adopt its conducting state, and in particular prior to the switch 13 being closed. When the auxiliary switch device 22 is turned on in the safe closure mode, voltage is applied to the AC load by the circuit protection apparatus 10 with an amplitude that is reduced with respect to the voltage that is applied in the normal mode when the circuit protection device 12 is conducting. Consequently any individual in electrical contact with any part of the system in which the circuit protection apparatus 10 is included is exposed to a reduced voltage. The controller 20 operates the auxiliary switch device 22 such that the voltage applied by the apparatus 10 in the safe closure mode is at a level and duration that would not ordinarily kill or seriously injure a human. The voltage applied by the auxiliary switch device 22 in the safe closure mode is 50V AC rms, or less.

In the safe closure mode, the controller 20 turns the auxiliary switch device 22 on at least once for a time period that is sufficiently long for the applied voltage to be detected by any individual in electrical contact with the system downstream of the apparatus 10. Typically, this conducting period is in the order of seconds or tenths of seconds, e.g. between 1s and 60s, or between 0.1s and 1s. The safe closure mode is implemented over a time period in the order of seconds, typically between 1 and 60 seconds but may be longer. The controller 20 may operate the auxiliary switch device 22 to be in its conducting state for the entire duration of the safe closure mode, or intermittently during it, for example for two or more time-spaced periods, or just once for a period that is shorter than the safe closure mode itself. In cases where the auxiliary switch device 22 is turned on more than once during the safe closure mode, each conducing period need not necessarily be the same length and need not necessarily be spaced apart by the same length of time. The time spacing between successive conducting periods is period is in typically in the order of tenths of seconds, e.g. between 0.1s and 1s, but could be longer, e.g. between 1s and 10s. For example, the auxiliary switch device 22 may be turned on for multiple 0.5s or 0.2s periods. Each conducting period may be spaced apart by 0.5s or 0.2s. An exemplary safe closure mode of 10 seconds might contain, for example, 8 x 0.5 s conducting periods each spaced by 0.5s, followed by 5 x 0.2s conducting periods each spaced by 0.2s.

Once the time period allocated for the safe closure mode has elapsed, the controller 20 causes the circuit protection device 12 to adopt its conducting state, which in typical embodiments involves closing the mechanical switch 13. The controller 20 may cause the auxiliary switch 22 to adopt its non-conducting state before, simultaneously with, or after the circuit protection device 12 adopts its conducting state. In preferred embodiments the apparatus 10 is configured such that the auxiliary device is short-circuited by closure of the circuit protection device 12. In any event, in preferred embodiments the circuit protection device 12 is caused to adopt its conducting state once the safe closure is over irrespective of any other condition of the apparatus 10 or the system to which it is connected, i.e. closing the circuit protection device 12 is not conditional on anything other than termination of the safe closure mode.

It will be apparent therefore that, for a human-discernable period prior to closing the circuit protection device 12, voltage is applied by the circuit protection apparatus 10 via the auxiliary switch device 22 at a level that is reduced when compared to the voltage that is applied when the circuit protection device 12 is conducting but at which it is discernable by a human. Hence, any individual in electrical contact with the system experiences a warning in the form of a relatively small electric shock prior to closure of the circuit protection device 12. The reduced voltage applied during the safe closure mode therefore serves as a warning to any individuals who may be at risk of electrocution that the circuit protection device is about to close.

Optionally, during the safe closure mode the controller 20 may operate the auxiliary switch device 12 such that the applied voltage level increases over time during the safe closure mode. This may be achieved by increasing the length of time that the switch device 22 is turned on during each half cycle of the AC supply (e.g. increasing the time between t2 and t3 in Figure 2).

The invention is not limited to the embodiment(s) described herein but can be amended or modified without departing from the scope of the present invention.

## Claims

1. A circuit protection apparatus (10) comprising:
an input for connection to an AC electrical supply;
an output for connection to an AC load;
a circuit protection device (12) connected between said input and said output and being operable between a non-conducting state and a conducting state in which voltage is provided at said output at a first level dependent on said AC electrical supply;
an auxiliary semiconductor switch device (22) connected between said input and said output in parallel with the circuit protection device and being operable between a conducting state and a non-conducting state; and
at least one controller (20) for controlling the operation of said circuit protection device and said auxiliary switch device,
wherein the circuit protection apparatus is operable in a safe closure mode in which, with the circuit protection device in its non-conducting state, said at least one controller causes said auxiliary semiconductor switch device to adopt its conducting state and to provide voltage at said output at a second level lower than said first level during a pre-determined period of time, said at least one controller being configured to cause said circuit protection device to adopt its conducting state in response to determining that said predetermined period of time has ended, and said at least one controller being configured to cause said auxiliary semiconductor switch device to provide voltage at said second level by operating the semiconductor switch device to control the amplitude of the voltage that is conducted by the auxiliary semiconductor switch device, **characterized in that** said pre-determined period of time has a length of at least 1s, and **in that** said second level does not exceed 50V AC rms.

2. The apparatus of claim 1 wherein said pre-determined period of time has a length of between 1s and 60s.

3. The apparatus of claim 1 or 2, wherein, during said pre-determined period of time, said auxiliary switch device (22) is caused to adopt its conducting state for at least one period of at least 0.1s, preferably between 0.1s and 1s.

4. The apparatus of claim 3, wherein said auxiliary switch device (22) is caused to toggle between its conducting state and non-conducting state at least once and preferably multiple times during said pre-determined period of time.

5. The apparatus of any preceding claim wherein said auxiliary switch device (22) comprises an AC semiconductor switch.

6. The apparatus of any preceding claim wherein said auxiliary switch device (22) comprises at least one semiconductor controlled rectifier (24A, 24B).

7. The apparatus of claim 6 wherein said auxiliary switch device (22) comprises first and second semiconductor controlled rectifiers (24A, 24B) arranged to conduct current in opposite directions.

8. The apparatus of any preceding claim wherein said auxiliary switch device (22) comprises a bidirectional triode thyristor.

9. The apparatus of any preceding claim wherein said circuit protection device (12) comprises a mechanical switch (13), and wherein causing said circuit protection device to adopt its conducting state involves closing said mechanical switch.

10. The apparatus of any preceding claim wherein said circuit protection device (12) comprises a circuit breaker.

11. The apparatus of claim 9 or 10 wherein said circuit protection device (12) is operable from its conducting state to its non-conducting state by opening said mechanical switch (13).

12. The apparatus of any one of claims 1 to 9 wherein said circuit protection device (12) comprises a fuse device.

13. The apparatus of any preceding claim further including a fault detection device (11), wherein said circuit protection device (12) is caused to operate from its conducting state to its non-conducting state in response to detection of an electrical fault by said fault detection device.

14. A method of operating a circuit protection apparatus (10), the apparatus comprising an input for connection to an AC electrical supply, an output for connection to an AC load, a circuit protection device (12) connected between said input and said output, and an auxiliary semiconductor switch device (22) connected between said input and said output in parallel with the circuit protection device, said method comprising:
with the circuit protection device in a non-conducting state, causing said auxiliary switch device to adopt a conducting state and to provide voltage at said output at a second level lower than a first level during a pre-determined period of time,
in response to determining that said predetermined period of time has ended, causing said circuit protection device to adopt a conducting state in which it provides voltage at said output at said first level,
and causing said auxiliary semiconductor switch device to provide voltage at said second level by operating the semiconductor switch device to control the amplitude of the voltage that is conducted by the auxiliary semiconductor switch device, **characterized in that** said pre-determined period of time has a length of at least 1s, and **in that** said second level does not exceed 50V AC rms.

## Patentansprüche

1. Schaltungsschutzeinrichtung (10), umfassend:
einen Eingang zum Anschluss an eine AC-Elektrizitätsversorgung;
einen Ausgang zum Anschluss an eine AC-Last;
eine Schaltungsschutzvorrichtung (12), die zwischen dem Eingang und dem Ausgang angeschlossen ist und zwischen einem nicht leitenden Zustand und einem leitenden Zustand, in dem an dem Ausgang eine Spannung auf einem ersten Pegel bereitgestellt wird, der von der AC-Elektrizitätsversorgung abhängig ist, betrieben werden kann;
eine Hilfshalbleiterschaltvorrichtung (22), die zwischen dem Eingang und dem Ausgang mit der Schaltungsschutzvorrichtung parallel angeschlossen ist und zwischen einem leitenden Zustand und einem nicht leitenden Zustand betrieben werden kann; und
mindestens eine Steuerung (20) zum Steuern des Betriebs der Schaltungsschutzvorrichtung und der Hilfsschaltvorrichtung, wobei die Schaltungsschutzeinrichtung in einem sicheren Schließmodus betrieben werden kann, in dem, wenn die Schaltungsschutzvorrichtung in ihrem nicht leitenden Zustand ist, die mindestens eine Steuerung veranlasst, dass die Hilfshalbleiterschaltvorrichtung ihren leitenden Zustand annimmt und während einer vorbestimmten Zeitspanne an dem Ausgang eine Spannung auf einem zweiten Pegel, der niedriger als der erste Pegel ist, bereitstellt, wobei die mindestens eine Steuerung dazu konfiguriert ist, die Schaltungsschutzvorrichtung zu veranlassen, ihren leitenden Zustand anzunehmen, als Reaktion auf ein Bestimmen, dass die vorbestimmte Zeitspanne abgelaufen ist, und wobei die mindestens eine Steuerung dazu konfiguriert ist, die Hilfshalbleiterschaltvorrichtung zu veranlassen, eine Spannung auf dem zweiten Pegel bereitzustellen, indem die Hilfshalbleiterschaltvorrichtung so betrieben wird, dass die Amplitude der von der Hilfshalbleiterschaltvorrichtung geleiteten Spannung gesteuert wird, **dadurch gekennzeichnet, dass** die vorbestimmte Zeitspanne eine Länge von mindestens 1 s aufweist, und dass der zweite Pegel 50 V AC RMS nicht überschreitet.

2. Einrichtung nach Anspruch 1, wobei die vorbestimmte Zeitspanne eine Länge zwischen 1 s und 60 s aufweist.

3. Einrichtung nach Anspruch 1 oder 2, wobei während der vorbestimmten Zeitspanne die Hilfsschaltvorrichtung (22) veranlasst wird, ihren leitenden Zustand für mindestens eine Zeitspanne von mindestens 0,1 s, vorzugsweise zwischen 0,1 s und 1 s, anzunehmen.

4. Einrichtung nach Anspruch 3, wobei die Hilfsschaltvorrichtung (22) veranlasst wird, während der vorbestimmten Zeitspanne mindestens einmal und vorzugsweise mehrmals zwischen ihrem leitenden Zustand und ihrem nicht leitenden Zustand umzuschalten.

5. Einrichtung nach einem der vorhergehenden Ansprüche, wobei die Hilfsschaltvorrichtung (22) einen AC-Halbleiterschalter umfasst.

6. Einrichtung nach einem der vorhergehenden Ansprüche, wobei die Hilfsschaltvorrichtung (22) mindestens einen halbleitergesteuerten Gleichrichter (24A, 24B) umfasst.

7. Einrichtung nach Anspruch 6, wobei die Hilfsschaltvorrichtung (22) einen ersten und zweiten halbleitergesteuerten Gleichrichter (24A, 24B) umfasst, die so angeordnet sind, dass sie Strom in entgegengesetzte Richtungen leiten.

8. Einrichtung nach einem der vorhergehenden Ansprüche, wobei die Hilfsschaltvorrichtung (22) einen bidirektionalen Trioden-Thyristor umfasst.

9. Einrichtung nach einem der vorhergehenden Ansprüche, wobei die Schaltungsschutzvorrichtung (12) einen mechanischen Schalter (13) umfasst und wobei Veranlassen, dass die Schaltungsschutzvorrichtung ihren leitenden Zustand annimmt, Schließen des mechanischen Schalters beinhaltet.

10. Einrichtung nach einem der vorhergehenden Ansprüche, wobei die Schaltungsschutzvorrichtung (12) einen Unterbrecher umfasst.

11. Einrichtung nach Anspruch 9 oder 10, wobei die Schaltungsschutzvorrichtung (12) durch Öffnen des mechanischen Schalters (13) von ihrem leitenden Zustand in ihrem nicht leitenden Zustand betrieben werden kann.

12. Einrichtung nach einem der Ansprüche 1 bis 9, wobei die Schaltungsschutzvorrichtung (12) eine Sicherungsvorrichtung umfasst.

13. Einrichtung nach einem der vorhergehenden Ansprüche, die ferner eine Fehlererkennungsvorrichtung (11) einschließt, wobei die Schaltungsschutzvorrichtung (12) als Reaktion auf Erkennen eines elektrischen Fehlers durch die Fehlererkennungsvorrichtung dazu veranlasst wird, von ihrem leitenden Zustand in ihrem nicht leitenden Zustand betrieben zu werden.

14. Verfahren zum Betreiben einer Schaltungsschutzeinrichtung (10), wobei die Einrichtung einen Eingang zum Anschluss an eine AC-Elektrizitätsversorgung, einen Ausgang zum Anschluss an eine AC-Last, eine zwischen dem Eingang und dem Ausgang angeschlossene Schaltungsschutzvorrichtung (12) und eine zwischen dem Eingang und dem Ausgang mit der Schaltungsschutzvorrichtung parallel angeschlossene Hilfshalbleiterschaltvorrichtung (22) umfasst, wobei das Verfahren Folgendes umfasst:
wenn die Schaltungsschutzvorrichtung in einem nicht leitenden Zustand ist, Veranlassen, dass die Hilfsschaltvorrichtung einen leitenden Zustand annimmt und während einer vorbestimmten Zeitspanne eine Spannung an dem Ausgang auf einem zweiten Pegel, der niedriger als ein erster Pegel ist, bereitstellt,
als Reaktion auf Bestimmen, dass die vorbestimmte Zeitspanne abgelaufen ist, Veranlassen, dass die Schaltungsschutzvorrichtung einen leitenden Zustand annimmt, in dem sie an dem Ausgang eine Spannung auf dem ersten Pegel bereitstellt,
und Veranlassen, dass die Hilfshalbleiterschaltvorrichtung eine Spannung auf dem zweiten Pegel bereitstellt, durch Betreiben der Halbleiterschaltvorrichtung, um die Amplitude der von der Hilfshalbleiterschaltvorrichtung geleiteten Spannung zu steuern, **dadurch gekennzeichnet, dass** die vorbestimmte Zeitspanne eine Länge von mindestens 1 s aufweist, und dass der zweite Pegel 50 V AC RMS nicht überschreitet.

## Revendications

1. Appareil de protection de circuit (10) comprenant :
une entrée pour une connexion à une alimentation électrique CA ; une sortie pour une connexion à une charge CA ;
un dispositif de protection de circuit (12) connecté entre ladite entrée et ladite sortie et pouvant fonctionner entre un état non conducteur et un état conducteur dans lequel une tension est fournie au niveau de ladite sortie à un premier niveau dépendant de ladite alimentation électrique CA ;
un dispositif interrupteur semi-conducteur auxiliaire (22) connecté entre ladite entrée et ladite sortie en parallèle avec le dispositif de protection de circuit et pouvant fonctionner entre un état conducteur et un état non conducteur ; et
au moins un dispositif de commande (20) pour commander le fonctionnement dudit dispositif de protection de circuit et dudit dispositif interrupteur auxiliaire,
dans lequel l'appareil de protection de circuit peut fonctionner dans un mode de fermeture sécurisée dans lequel, le dispositif de protection de circuit étant dans son état non conducteur, ledit au moins un dispositif de commande amène ledit dispositif interrupteur semi-conducteur auxiliaire à adopter son état conducteur et à fournir une tension au niveau de ladite sortie à un second niveau inférieur audit premier niveau pendant une période de temps prédéterminée, ledit au moins un dispositif de commande étant configuré pour amener ledit dispositif de protection de circuit à adopter son état conducteur en réponse à la détermination que ladite période de temps prédéterminée est terminée, et ledit au moins un dispositif de commande étant configuré pour amener ledit dispositif interrupteur semi-conducteur auxiliaire à fournir une tension audit second niveau en faisant fonctionner le dispositif interrupteur semi-conducteur afin de commander l'amplitude de la tension qui est conduite par le dispositif interrupteur semi-conducteur auxiliaire, **caractérisé en ce que** ladite période de temps prédéterminée a une durée d'au moins 1 s et **en ce que** ledit second niveau ne dépasse pas 50 V CA efficace.

2. Appareil selon la revendication 1, dans lequel ladite période de temps prédéterminée a une durée comprise entre 1 s et 60 s.

3. Appareil selon la revendication 1 ou 2, dans lequel, pendant ladite période de temps prédéterminée, ledit dispositif interrupteur auxiliaire (22) est amené à adopter son état conducteur pendant au moins une période d'au moins 0,1 s, de préférence entre 0,1 s et 1 s.

4. Appareil selon la revendication 3, dans lequel ledit dispositif interrupteur auxiliaire (22) est amené à basculer entre son état conducteur et son état non conducteur au moins une fois et de préférence de multiples fois pendant ladite période de temps prédéterminée.

5. Appareil selon une quelconque revendication précédente, dans lequel ledit dispositif interrupteur auxiliaire (22) comprend un interrupteur semi-conducteur CA.

6. Appareil selon une quelconque revendication précédente, dans lequel ledit dispositif interrupteur auxiliaire (22) comprend au moins un redresseur commandé par semi-conducteur (24A, 24B).

7. Appareil selon la revendication 6, dans lequel ledit dispositif interrupteur auxiliaire (22) comprend des premier et second redresseurs commandés par semi-conducteurs (24A, 24B) agencés pour conduire le courant dans des directions opposées.

8. Appareil selon une quelconque revendication précédente, dans lequel ledit dispositif interrupteur auxiliaire (22) comprend un thyristor triode bidirectionnel.

9. Appareil selon une quelconque revendication précédente, dans lequel ledit dispositif de protection de circuit (12) comprend un interrupteur mécanique (13), et dans lequel le fait d'amener ledit dispositif de protection de circuit à adopter son état conducteur implique la fermeture dudit interrupteur mécanique.

10. Appareil selon une quelconque revendication précédente, dans lequel ledit dispositif de protection de circuit (12) comprend un disjoncteur.

11. Appareil selon la revendication 9 ou 10, dans lequel ledit dispositif de protection de circuit (12) peut fonctionner de son état conducteur à son état non conducteur par l'ouverture dudit interrupteur mécanique (13).

12. Appareil selon l'une quelconque des revendications 1 à 9, dans lequel ledit dispositif de protection de circuit (12) comprend un dispositif fusible.

13. Appareil selon une quelconque revendication précédente comportant en outre un dispositif de détection de défaut (11), dans lequel ledit dispositif de protection de circuit (12) est amené à fonctionner de son état conducteur à son état non conducteur en réponse à la détection d'un défaut électrique par ledit dispositif de détection de défaut.

14. Procédé de fonctionnement d'un appareil de protection de circuit (10), l'appareil comprenant une entrée pour une connexion à une alimentation électrique CA, une sortie pour une connexion à une charge CA, un dispositif de protection de circuit (12) connecté entre ladite entrée et ladite sortie, et un dispositif interrupteur semi-conducteur auxiliaire (22) connecté entre ladite entrée et ladite sortie en parallèle avec le dispositif de protection de circuit, ledit procédé comprenant :
r ule dispositif de protection de circuit étant dans un état non conducteur, le fait d'amener ledit dispositif interrupteur auxiliaire à adopter un état conducteur et à fournir une tension au niveau de ladite sortie à un second niveau inférieur à un premier niveau pendant une période de temps prédéterminée,
en réponse à la détermination que ladite période de temps prédéterminée est terminée, le fait d'amener ledit dispositif de protection de circuit à adopter un état conducteur dans lequel il fournit une tension au niveau de ladite sortie audit premier niveau,
et le fait d'amener ledit dispositif interrupteur semi-conducteur auxiliaire à fournir une tension audit second niveau en faisant fonctionner le dispositif interrupteur semi-conducteur pour commander l'amplitude de la tension qui est conduite par le dispositif interrupteur semi-conducteur auxiliaire, **caractérisé en ce que** ladite période de temps prédéterminée a une durée d'au moins 1 s et **en ce que** ledit second niveau ne dépasse pas 50 V CA efficace.
